# EUROPEAN PATENT APPLICATION

(11) **EP 1 469 258 A1**
(43) Date of publication of application: **20.10.2004**
(21) Application number: 04252154.2
(22) Date of filing: 13.04.2004
(51) Int. Cl.: F24F 13/14, B60H 1/00

(54) **Flap valve arrangement**

(30) Priority: 14.04.2003 GB 0308580
(71) Applicant: Delphi Technologies, Inc., Troy, MI 48007 (US)
(72) Inventor: Dautry, Etienne A., 4940 Luxembourg (LU)
(74) Representative: Jones, Keith William

(57) **Abstract**

The present invention relates to a flap valve arrangement, for controlling the flow of air through a duct, comprising at least one spindle and a flap valve connected to the spindle, for moving the flap valve between a first position for substantially closing the air duct and a second position for substantially opening the duct wherein the flap valve is, at least at, the free end thereof covered with a flexible material, such as a foam, in order to provide a flexible member at the end of the flap valve.

The flat valve arrangement according to the present invention has particular application in a heating, ventilation and air conditioning system, in particular in a motor vehicle.

## Description

### Technical Field

The present invention relates to a flap valve arrangement for controlling the flow of air through a duct. The present invention is particularly suitable for a heating ventilating and air conditioning system (or HVAC Module), in particular in a motor vehicle.

### Background of the invention

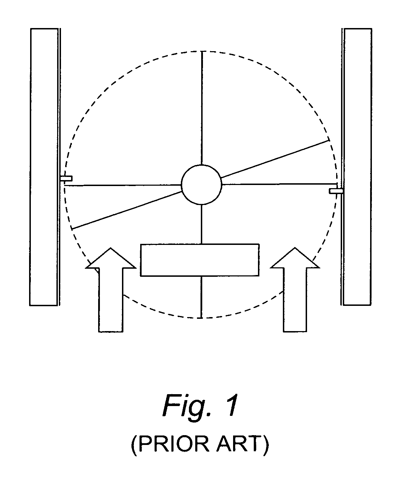

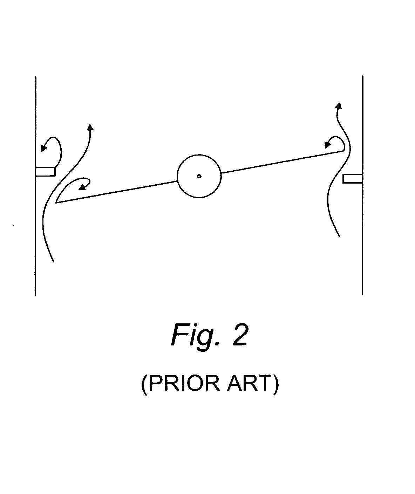

In any HVAC Module, there exists outlets from which the opening needs to be adjusted to customer demand to regulate the flow of air leaving the opening.
Two types of plastic outlet valves are known in HVAC modules. As shown in Figure 1, a single flap valve is rotatably positioned within the air duct for closing respectively opening the air duct. The main disadvantage of this type of valve is the fact that it takes up too much space and that it is too noisy when the flap is almost closed. One of the reasons for the flap to be too noisy, is the fact that valve seats are necessary in the duct in order to provide a contact area for the free ends of the valve in order to close off the air ducts by means of the free ends of the flap valve and said valve seats. When the flap valve is almost closed, the air flow in between the valve seats and the free ends of the flap valve will generate turbulences as indicated in Figure 2. In the full open position, the presence of the axis, upon which the flap valve is positioned, reduces the cross-section of the ducts, thus reducing air flow.

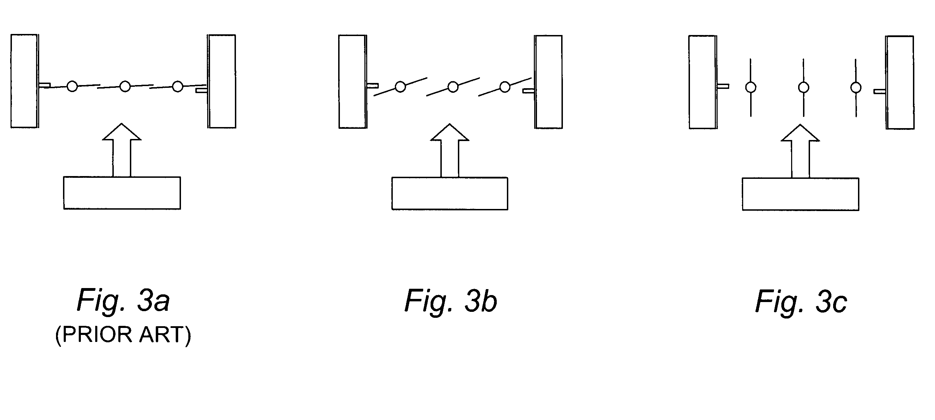

Figures 3a, 3b and 3c show multiple flap valves that are linked together to rotate together. As already indicated above when referring to figures 1 and 2, the main disadvantage of the arrangement according to Figures 3a, 3b and 3c is the fact this arrangement is too noisy when the flap valves are almost closed. The need for having valve seats will generate turbulence at the tips of the valves and at the valve seats themselves. In the full-open position, the presence of the axis, whereupon the flap valves are positioned, reduces the cross-section of the duct thus reducing air flow.

### Summary of the Invention

The aim of the present invention is to provide a new design of a flap valve arrangement in order to overcome the above mentioned disadvantages. The object of the present invention is achieved in that the invention provides a flap valve arrangement, for controlling the flow of air through a duct, comprising at least one spindle and a flap valve connected to the spindle, for moving the flap valve between a first position for substantially closing the air duct and a second position for substantially opening the duct, characterised in that, the flap valve is, at least at, the free end thereof covered with a flexible material, such as a foam, in order to provide a flexible member at the end of the flap valve.

In a preferred embodiment, the flexible material comprises a semi-closed cells foam.

Because of this arrangement a first reduction in the production of noise is achieved, since the flexible material, for instance semi-cells foam, will absorb the high frequency air rushing noise which is generated at the tip of the flap valve especially when the latter approaches the first position thereof.

According to the present invention it is possible that the flap valve is substantially completely covered with the flexible material, at the side of the flap valve facing the air flow.

In the prsent text the wording 'the side of the flap valve facing the air flow' is used. With this terminology the side of the flap valve is meant which is exposed to the direct impact of the flow through the duct.

By covering, in essence, the complete surface of the flap valve, the production of noise can be further reduced.

According to the present invention it is possible that wherein the arrangement comprises a first and a second flap valve, each connected with a spindle for moving the flap valve from a first position for substantially closing the duct to a second position for substantially opening the duct, wherein the free end of the first flap valve abuts the free end of the second flap valve in the first position of the flap valves, and when at least one of the flap valves is provided with a flexible material on the free end thereof.

According to a preferred embodiment it is possible that both the free end of the first flap valve and the second flap valve is provided with a flexible material, wherein it is further possible that the first flap valve and the second flap valve are substantially completely covered with a flexible material, at the side of the flap valves facing the air flow.

Because of these measures the flap valve arrangement can be provided with two flap valves provided on opposing sides of a duct. When moving the flap valves from the second towards the first position thereof, the flap valves will decrease the open cross-sectional area of the duct. Because of the symmetrical arrangement, having two flaps on opposite sides of the duct, the air flow will remain central in the duct. In case the flap valves reach the first position thereof, the flexible material, such as a foam, at the end of both free ends of the flap valves will be deformed creating a tight seal between the respective ends of the flap valves. The presence of the flexible material also reduces the generation of noise even if the space between the free ends of the flap valves is limited and high frequency air rushing noise would be produced between the two flap valves, in case the flexible material would not be present.

According to a preferred embodiment the free end of both the first and the second flap valve are formed to create a passage between the free ends of the flap valves, essentially in the form of a Venturi, in case the flaps are moved from the second position to which the first position thereof.

The fact that between the free ends of the valves there is a passage having the form of a Venturi tube, the opening and closing of the flap valve is further enhanced. The flow through the free ends of the flap valves will create a relatively low pressure between the free ends of the flap valves. That means that the free ends of the flap valves will be drawn to one another because of the presence of this low pressure area. Moving the flaps towards each other will therefore be facilitated by the presence of the low pressure area.

The generation of noise with the flap valve arrangement according to the present invention can be further improved in that the free ends of the flap valve is formed in order to be essentially parallel with the flow direction through the duct, when the flap valve is in the first position thereof.

Because of this measure the air flow will be guided along the wall of the air duct or alternatively will be guided parallel in between two opposing free ends of two co-operating flap valves, in case the flap valve is moved to the first position thereof, further limiting the creation of turbulence at the free end of the flap valves.

In an alternative embodiment, it is possible that essentially the central axis of the flap valve is attached to the spindle, whereby the flap valve essentially has the form of an S.

Thereby it is possible that the air duct essentially is shaped as an S.

Thereby it is possible that the air duct is formed in order to provide a first cross sectional area, seen in the direction of the flow through the duct extreme upward of the flap valve having the latter in the first position thereof, and a second cross sectional area, smaller than the first cross sectional area downstream of said flap valve.

Further it is possible that the free end of the flap valve and the wall of the duct are formed in order to create a passage between the free ends of the flap valve and the wall having the form of essentially a Venturi tube, in case the flap valve is moved from the second to which the first position thereof.

### Brief Description of the Drawings

The present invention will now be described, by way of example, with reference to the accompanying drawings, in which:
Figure 1 is a first prior art flap valve arrangement;
Figure 2 illustrates the generation of turbulence at the tips of a flap valve and at the valve seat in an arrangement according to Figure 1;
Figures 3a, 3b and 3c show a second prior art flap valve arrangement;
Figures 4a, 4b and 4c show a side view of a flap valve arrangement in accordance with the present invention illustrating three different positions of the flap valves.
Figure 5 illustrates the creation of a low pressure area in case flap valve arrangement according to figures 4a-4c reaches a near closed position.
Figure 6 illustrates schematically the possible build up of the flap valve arrangement according to figures 4a-4c.
Figure 7 shows in detail a valve seat to be used in the arrangement according to Figure 6.
Figure 8 shows an alternative embodiment of an air duct in accordance with the present invention;
Figure 9 shows a further alternative embodiment of a flap valve arrangement in accordance with the present invention.

### Description of the Preferred Embodiment

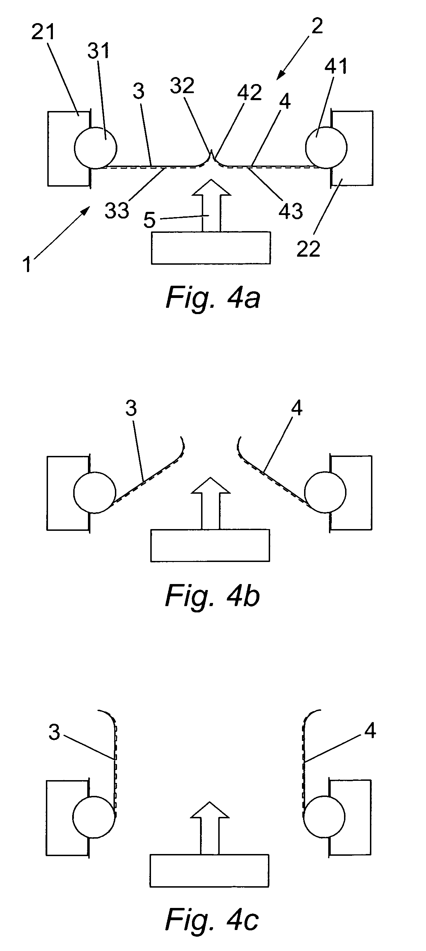

With reference to Figures 4a, 4b and 4c a flap valve arrangement 1 according to the present invention is shown for use in an HVAC Module of a motor vehicle, for controlling the flow of air through a duct 2 and out through an opening in the passenger compartment of the motor vehicle.

The flap valves arrangement 1 comprises a pair of flap valves 3, 4 which are preferably substantially identical. Each flap valve 3, 4 is mounted in the wall 21, 22 of the air flow duct 2, by means of a spindle 31, 41.

The flat valves 3, 4 are preferably operated simultaneously, either manually or by a single electric motor. The inner edges of the flap valves 3,4 which engage one another on closing are preferably curved as illustrated to reduce noise.

As shown in Figure 4a, the curved ends 32, 42 of the respective flap valves 3, 4 are formed in that the free ends of the respective valves 3, 4 are directed essentially parallel to the air flow 5 through the duct 2.

The respective sides of the flap valve 3, 4 facing the air flow 5 are covered with a flexible material 33, 43. This flexible material 33, 43 preferably consists of a semi-closed cells foam. Especially the presence of such a semi-openness cells foam will absorb high frequency air rushing, generated by air flowing along the service of the respective valves 3, 4.

The valves 3, 4 can be moved from a first position as shown in Figure 4a for substantially closing off the air duct 2 towards an essentially fully open position which is shown in Figure 4c. Figure 4b shows an intermediate position wherein the valve 3, 4 are almost closed.

As shown in Figures 4b and 4c the air flows through the duct and the outlet can take place without any obstacle in the flow. Because of the absence of obstacles in the flow and due to the shape of the free ends of the flaps, the generation of turbulence is reduced. Therefore the noise generated by air leaving the outlet is reduced.

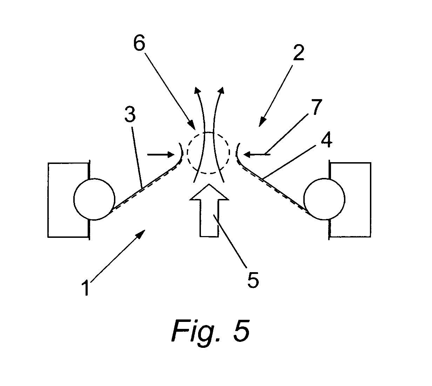

Figure 5 illustrates the flap arrangement 1 according to Figures 4a-4c wherein the flaps 3, 4 are in an almost closed position. The air flow 5 through the duct 2 will be guided by the exposed surfaces 33, 43 facing the air flow 5 wherein the air flow will be accelerated near the free ends of the valve 3, 4. This acceleration is caused by the shape of the passage in between the flaps 3 and 4, which resembles a Venturi. The Venturi-shaped passage will create a low pressure area which is indicated by dotted line 6. The low pressure area 6 will generate a force 7 trying to move the ends of the respective valve 3, 4 towards each other. That means that the Venturi shaped opening between the flaps 3, 4 will help the closing off of the air duct 2 by means of the flap 3 and 4.

With reference to figures 4a-4c and 5 it is observed that the presence of the flexible material 33, 43 on the respective flaps 3, 4 will help to create a tight air seal when the free ends of the respective valve 3,4 are moved towards each other. The flexible material on the free ends of both valves will be squeezed together and provide the required air tight seal.

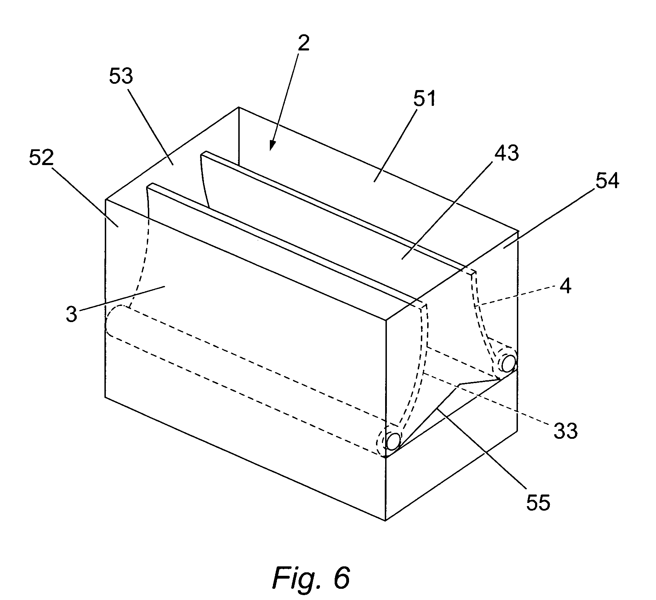

Figure 6 shows a schematic overview of the flap valve arrangement according to Figures 4 and 5, in perspective. According to Figure 2 the air duct 2 comprises two opposing longitudinal walls 51, 52 and to side wall 53 and 54. Flap 3 is attached to the interior of wall 52. Flap 4 is attached to the interior of wall 51. In case the flaps 3,4 are moved to the closed position thereof, the air duct 2 will be closed off in a first longitudinal direction. In order to also seal off the air duct 2 at the side walls thereof a valve seat 55 is provided on both the side walls 54 and 53.

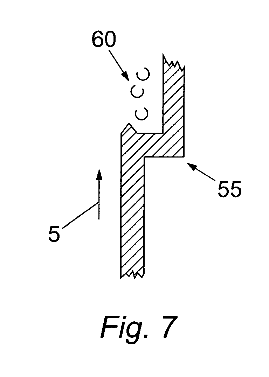

A possible embodiment of the valve seat 55 is shown in Figure 7. The valve seat 55 is formed in order that the air flow 5 flowing along the valve seat will not be obstructed. Slight turbulence 60 might be formed just above the valve seat 55, generating a limited amount of noise. Following the embodiment according to figure 7 the valve seat 55 can be an integral part of the side wall 54 of the air duct tube.

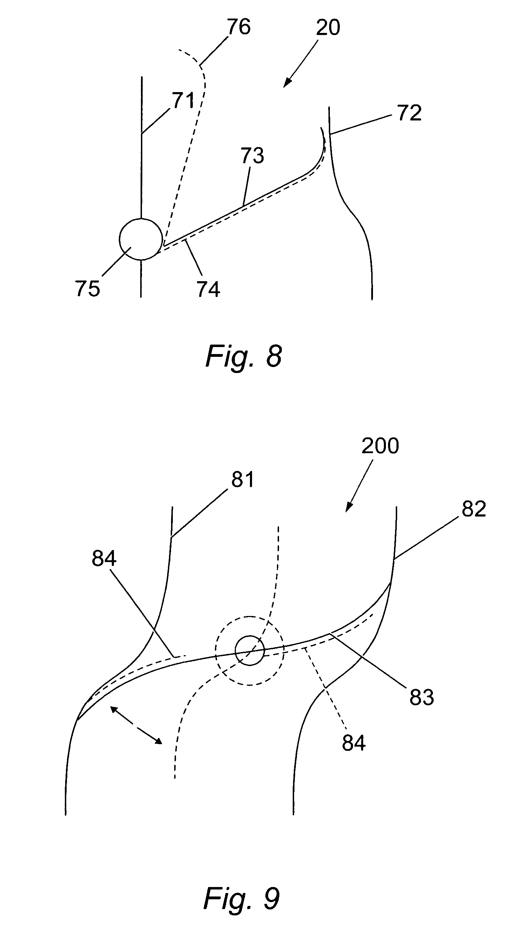

According to an alternative embodiment, as shown in figure 8, an air duct 20 is formed by a first side wall 71 and an opposing side wall 72. A valve 73, on one side provided with a flexible material 74, is connected to the side wall 71 by means of a spindle 75. The flap valve 73 is moveable from the position as indicated in figure 8 to a position as shown in dotted line 76 in order to essentially open the air duct 20. Side wall 72 is formed in order to create a cross sectional area which is, in the position of the flap 73, as shown in figure 8, smaller downstream of the flap than upstream thereof. The side wall 72 is formed in order to create a Venturi shaped opening in between the free end of the flap valve 73 and the side wall 72 when moving the flap valve 73 from the position as shown in Figure 8 to which the open position thereof.

Figure 9 shows an alternative embodiment of an air duct 200 having a first side wall 81 and a second side wall 82 both formed essentially in the form of an S. In the air duct 200 a flap valve 83 is positioned indicated in full line in the first position thereof and in dotted line in a second position thereof. The service of the flap valve is provided with a flexible material 84 for creating a sealing service at the respective free ends of the flap valve 83.

## Claims

1. Flap valve arrangement (1), for controlling the flow of air through a duct (2), comprising at least one spindle (31,41) and a flap valve (3,4) connected to the spindle (31,41), for moving the flap valve (3,4) between a first position for substantially closing the air duct (2) and a second position for substantially opening the duct (2), **characterised in that**, the flap valve (3,4) is, at least at, the free end thereof (32,42) covered with a flexible material (33,43), such as a foam, in order to provide a flexible member at the end of the flap valve (3,4).

2. Flap valve arrangement (1) according to claim 1, wherein the flexible material (33, 43) comprises a semi-closed cells foam.

3. Flap valve arrangement (1) according to claim 1 or 2, wherein the flap valve (3,4) is substantially completely covered with the flexible material (33,43) at a side of the flap valve (3,4) facing the air flow (5).

4. Flap valve arrangement (1), according to claims 1-3, wherein the arrangement (1) comprises a first (3) and a second flap valve (4), each connected with a spindle (31,42) for moving the flap valve (3,4) from a first position for substantially closing the duct (2) to a second position for substantially opening the duct (2), wherein the free end (32) of the first flap valve (3) abuts the free end (42) of the second flap valve (4) in the first position of the flap valves (3,4), and when at least one of the flap valves (3,4) is provided with a flexible material (33,43) on the free (32,42) end thereof.

5. Flap valve arrangement (1) according to claim 4, wherein both the free end (32,42) of the first flap valve (3) and the second flap valve (4) is provided with a flexible material (33,43).

6. Flap valve arrangement (1) according to claim 4 or 5, wherein the first flap valve (3) and the second flap valve (4) are substantially completely covered with a flexible material (33,43), at the side of the flap valves (3,4) facing the air flow (5).

7. Flap valve arrangement (1) according to claim 4-6, wherein the free end (32,42) of both the first (3) and the second (4) flap valve are formed to create a passage between the free ends (32,42) of the flap valves (3,4), essentially in the form of a Venturi, in case the flaps (3,4) are moved from the second position to which the first position thereof.

8. Flap valve arrangement (1) according to one of the preceding claims, wherein the free end (32,42) of the flap valve (3,4) is formed in order to be essentially parallel with the flow direction through the duct (2), when the flap valve is in the first position thereof.

9. Flap valve arrangement (1) according to one of the preceding claims, wherein essentially the central axis of the flap valve (3,4) is attached to the spindle (31,41), whereby the flap valve (3,4) essentially has the form of an S.

10. Flap valve arrangement (1) according to claim 9, wherein the air duct (2) essentially is shaped as an S.

11. Flap valve arrangement (1) according to one of the preceding claims, wherein the air duct (2) is formed in order to provide a first cross sectional area, seen in the direction of the flow (5) through the duct upstream of the flap valve (73), and a second cross sectional area, smaller than the first cross sectional area downstream of the flap valve (73).

12. Flap valve arrangement (1) according to one of the preceding claims, wherein the free end of the flap valve (73) and the wall (72) of the duct (20) are formed in order to create a passage between the free ends of the flap valve (73) and the wall (72) having the form of essentially a Venturi tube, in case the flap valve (73) is moved from the second to which the first position thereof.
